(19) **Europäisches Patentamt**

**European Patent Office**

**Office européen des brevets**

(11) Veröffentlichungsnummer: **0 329 046 B1**

(12) **EUROPÄISCHE PATENTSCHRIFT**

(45) Veröffentlichungstag der Patentschrift: **25.11.92**

(21) Anmeldenummer: **89102410.1**

(22) Anmeldetag: **11.02.89**

(51) Int. Cl.⁵: **E03F 7/02**, F16K 7/10

(54) **Vorrichtung zum Abdichten von Schachteinläufen.**

(30) Priorität: **18.02.88 DE 3804980**

(43) Veröffentlichungstag der Anmeldung:
**23.08.89 Patentblatt 89/34**

(45) Bekanntmachung des Hinweises auf die
Patenterteilung:
**25.11.92 Patentblatt 92/48**

(84) Benannte Vertragsstaaten:
**AT BE CH DE FR GB IT LI LU NL SE**

(56) Entgegenhaltungen:
DE-C- 3 341 899        FR-A- 828 448
FR-A- 2 391 162        GB-A- 13 611
US-A- 3 120 859        US-A- 3 129 726

(73) Patentinhaber: **Beck, Erhard**
**Schwaigerner Strasse 19**
**W-6927 Bad Rappenau(DE)**

(72) Erfinder: **Beck, Erhard**
**Schwaigerner Strasse 19**
**W-6927 Bad Rappenau(DE)**

(74) Vertreter: **Neugebauer, Bernhard**
**Tölzer Strasse 7**
**W-7100 Heilbronn(DE)**

## Beschreibung

Die Erfindung betrifft eine Abdichtvorrichtung zum Abdichten der Einlauföffnung an Schächten, Kanälen u. dgl. nach dem Oberbegriff des Anspruchs 1.

Überall wo gefährliche oder schädliche Flüssigkeiten u. dgl. hergestellt, weiterverarbeitet, gelagert oder transportiert werden, besteht die Gefahr, daß mehr oder weniger große Mengen einer solchen Flüssigkeit bei unsachgemäßer Handhabung oder bei Unfällen durch Ablaufschächte in das Kanalnetz gelangen. In solchen Fällen sollten die Einlauföffnungen der Schächte und Kanäle abgesperrt werden. Dafür wurden bisher Sandsäcke und/oder Gummimatten verwendet. Diese Maßnahmen bieten zwar einen gewissen Widerstand gegen die abfließende Flüssigkeit, können jedoch nicht verhindern, daß Flüssigkeiten durch einen Einlaufschacht in das Kanalnetz gelangen. Es ist bekannt, daß bereits geringe Mengen einer solchen Flüssigkeit, z.B. ÖL, eine erhebliche Verschmutzung des Wassers bzw. Erdbodens hervorrufen, so daß dieses bzw. dieser unbrauchbar wird. Es ist natürlich denkbar, alle Schachteinläufe mit einer Verschlußeinrichtung zu versehen. Eine solche Umrüstung wäre jedoch außerordentlich kosten- und zeitaufwendig, von der ständigen Wartung abgesehen, also in der Praxis nicht durchführbar. Zusätzlich müßten diese Verschlußeinrichtungen gegen unbefugtes Hantieren gesichert sein.

Aus der FR-A-828 448 ist bereits eine Abdichtvorrichtung für Zylinder von Verbrennungsmotoren bekannt. Diese besteht aus einer allseitig geschlossenen Blase aus elastischem Material, in der ein etwa zylinderförmiger Behälter aus starrem Material angeordnet ist. Die Blase ist mit ihrem Deckenteil und mit ihrem Bodenteil mit den entsprechenden Stirnflächen des Behälters, z.B. durch Aufvulkanisieren, flächig fest verbunden, so daß Blase und Behälter eine untrennbare Einheit bilden. Durch ein Füllventil am Deckenteil und innerhalb des Behälters angebrachte Rohrleitungen kann ein Druckmittel in den Ringraum zwischen dem Behälter und der Blase eingeleitet werden, so daß sich die Blase radial ausdehnt und durch Anlegen an die Zylinderöffnung diese abschließt. Durch die starre flächige Verbindung an den beiden Stirnflächen ist die Blase in diesen beiden Bereichen undehnbar. Diese feste Verbindung ist jedoch für die Funktion der Abdichtvorrichtung wesentlich, da im aufgeblasenen Zustand der Behälter nach oben angehoben sein muß, um ausreichend Blasenmaterial für die radiale Ausdehnung zu erhalten. Eine weitere Radialdehnung in einem anderen Axialbereich auf einen eventuell größeren Durchmesser ist aus diesem Grund nicht möglich. Diese Abdichtvorrichtung ist daher nur für glatte Zylinder mit geringen Durchmesserunterschieden und einer einzigen größeren Radialausdehnung, jedoch nicht für Schächte o. dgl. mit mehreren axial versetzten stark unterschiedlichen Durchmessern und ebenfalls unterschiedlichen Umfangsformen geeignet. Infolge des starren Behälters im Innern erfordert die Abdichtvorrichtung zudem relativ viel Raum für Lagerung und Transport und ist daher für eine raumsparende Unterbringung untauglich.

Aufgabe der Erfindung ist es daher, eine Abdichtvorrichtung zu schaffen, durch die jeder Schachteinlauf unabhängig von dessen Durchmesser und Querschnittsform nicht nur dicht, sondern auch bündig am Einlaufrand abgedichtet wird, so daß mit Sicherheit keine Flüssigkeit in den Kanal gelangen kann. Ferner soll erreicht werden, daß sich die Abdichtvorrichtung raumsparend unterbringen läßt, um Lager- und Transportraum zu sparen.

Diese Aufgabe wird durch die Erfindung durch die im Kennzeichen des Anspruchs 1 genannten Merkmale gelöst.

Die mit der Erfindung erzielten Vorteile bestehen insbesondere darin, daß der Kanal bereits am Einlauf verschlossen wird. Da die Handhabung der erfindungsgemäßen Abdichtvorrichtung einfach ist, kann in kürzester Zeit das Einlaufen von nicht in den Kanal gehörenden Flüssigkeiten verhindert werden. Diese Flüssigkeiten können dann oberirdisch abgefangen, abgepumpt und beseitigt werden. Infolge der speziellen Ausbildung der Blase durch ihre Form und ihre große Dehnfähigkeit ist sie für alle Schachteinläufe mit ihren unterschiedlichen Durchmessern und Querschnittsformen geeignet, so daß nur eine einzige Blasengröße erforderlich ist. Diese Blase kann mit einer zugeordneten Preßluftarmatur zu einer Einheitspackung, z.B. in Größe eines bekannten Sanitätskastens, zusammengefaßt werden, die in ihren Abmessungen handlich, leicht und raumsparend unterbringbar und somit auch transportierbar ist, so daß sie an jeden Einsatzort gebracht werden kann bzw. an Lagerstellen und Umschlagplätzen von derartigen Flüssigkeiten gelagert werden kann. Flüssigkeit transportierende Fahrzeuge, Feuerwehr, technisches Hilfswerk, Polizei, städtische Fahrzeuge und dgl. können so ohne Aufwand eine oder mehrere dieser Packungen im Fahrzeug mitführen, so daß im Bedarfsfall unvermittelt eingegriffen werden kann, um Schaden zu verhindern, wie das Eindringen einer solchen Flüssigkeit in das Grundwasser, in eine Kläranlage und von dort in Flüsse und den Erdboden. Da die Handhabung einfach ist, kann so in kürzester Zeit ein Einlaufschacht unabhängig von der Querschnittsgestaltung dicht verschlossen werden.

Weitere Ausgestaltungen der Erfindung sind den Unteransprüchen zu entnehmen.

Im folgenden wird die Erfindung anhand eines in der Zeichnung dargestellten Ausführungsbeispiels näher erläutert.

Es zeigen:

Fig. 1 die Frontansicht der Blase;
Fig. 2 die Seitenansicht der Blase;
Fig. 3 die Blase im eingeführten Zustand;
Fig. 4 die Blase im verschließenden Zustand.

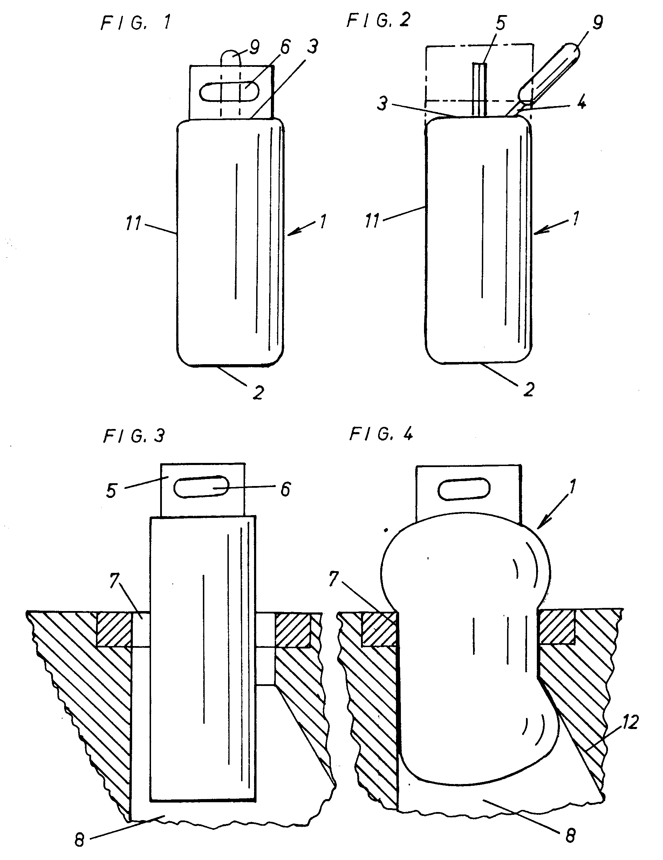

Nach den Fig. 1 und 2 besteht die Abdichtvorrichtung aus einer Blase 1. Sie besteht aus einem etwa zylinderförmigen Hohlkörper 11 mit einem Bodenteil 2 und einem Deckenteil 3. Die gesamte Blase 1 ist einteilig hergestellt und weist eine innere Schicht aus hochelastischem Gummi mit einem äußeren Überzug aus einem entsprechend elastischen sowie öl- und säurefesten Material auf. Die Blase 1 besitzt somit eine hohe Dehnfähigkeit von etwa 1 : 8 oder darüber.

Nach dem ersten Fertigungsvorgang ist ein einseitig durch das Bodenteil geschlossener Hohlkörper 11 vorhanden, wie in Fig. 2 strichpunktiert angedeutet ist. Nach dem Einsetzen eines Füllventils 4 im oberen Bereich des Hohlkörpers 11 wird dieser obere Bereich gegeneinander gedrückt und durch Verkleben, Vulkanisieren o. dgl. gasdicht verschlossen. Dadurch entsteht ein Griffteil 5, in das eine Grifföffnung 6 eingestanzt ist und das in seiner Breite etwas kleiner als der Durchmesser des Hohlkörpers 11 ist.

Im praktischen Einsatz wird der Hohlkörper 11 in die Einlauföffnung 7 des Schachtes 8 etwa untermittig, vorzugsweise etwa zu 2/3 eingeführt, wie in Fig. 3 angedeutet ist. Anschließend wird die Blase 1 aufgeblasen, so daß etwa die Form entsteht, wie sie in Fig. 4 gezeigt ist. Dabei liegt der Hohlkörper 11 dicht am Rand der Einlauföffnung 7 und am Schachthals 12 an, und zwar unabhängig von der Querschnittsform und -größe der Einlauföffnung 7 und dem Schachthals 12. Es ist ersichtlich, daß die Einlauföffnung 7 bis an ihren oberen Rand dicht durch die Blase 1 abgeschlossen ist.

Das Aufblasen der Blase 1 kann mit einer Luftpumpe, einem Kompressor o. dgl. erfolgen. Als sehr zweckmäßig hat sich eine Druckluftkapsel 9 erwiesen, die auf das Füllventil 4 aufgeschraubt wird, wonach eine vorbestimmte Menge von Druckluft in den Hohlkörper 11 strömt und diesen aufbläst. Infolge der hohen Dehnfähigkeit des Hohlkörpers 11 genügt im Regelfall eine einzige Größe der Druckluftkapsel 9. Bei sehr großen Durchmessern können auch zwei Druckluftkapseln 9 eingesetzt werden, ohne daß die Blase 1 Schaden erleidet.

Blase 1 und Druckluftkapsel 9 können in einer Packung zusammengefaßt werden, so daß ein komplettes Einsatzpaket entsteht. Natürlich können jeder Packung zwei oder auch mehr Druckluftkapseln 9 beigepackt werden, denn die Blase ist in der Regel mehrmals einsetzbar. Diese als Einheitspak-

kungen zu bezeichnenden Packungen können leicht und raumsparend in den Einsatzfahrzeugen mitgeführt werden, so daß im Bedarfsfall unverzüglich ein Einsatz erfolgen kann, um die Einlauföffnung des Schachtes 8 schnell und dicht zu verschließen. Gleiches gilt auch für die ortsfeste Unterbringung in Gebäuden.

Infolge der hohen Dehnbarkeit der Blase 1 ist für die verschiedenen Arten von Einlauföffnungen 7 nur eine einzige Größe der Blase 1 erforderlich. Um eine hohe und dichte Abdichtung, insbesondere im unteren Bereich, also am Schachthals 12 anliegenden Bereich der Blase 1 zu erreichen, ist diese im oberen Bereich in der Materialstärke dicker ausgebildet als im unteren Bereich. Auf diese Weise kann sich der Umfang der Blase 1 besser genau an die Form des Schachthalses 12 anpassen, um so auch unterhalb der Einlauföffnung 7 zuverlässig abzudichten.

Natürlich läßt sich auch eine andere, als vorher beschriebene Art der Herstellung durchführen, wenn es aus Material- oder Herstellungsgründen erforderlich ist.

## Patentansprüche

1. Abdichtvorrichtung zum Abdichten der Einlauföffnung (7) an Schächten, Kanälen u. dgl. auf Straßen, Plätzen, Wegen, Grünflächen, Haus- und Hofentwässerungen sowie Gebäuden, in der Industrie u. dgl. gegen den Einlauf von schädlichen Flüssigkeiten, wie Chemikalien, Ölen, Kraftstoffen, Treibstoffen u. dgl. mit einer als zylinderförmiger Körper ausgebildeten Blase (1), bestehend aus elastischem Material, deren Länge größer ist als deren Durchmesser, bei der der mittige Hohlkörper (11) an einem Ende durch ein eine Handhabe (5) und ein Füllventil (4) tragendes Deckenteil (3) und das andere Ende durch ein Bodenteil (2) geschlossen ist, dadurch gekennzeichnet, daß der Deckenteil (3) und der Bodenteil (2) ausschließlich aus dem gleichen elastischen Material mit ausschließlich der gleichen Dehn fähigkeit von mindestens 1 : 8 wie der Hohlkörper (11) bestehen und daß der Deckenteil (3) und der Bodenteil (2) etwa die gleiche Materialstärke aufweisen wie der Hohlkörper (11).

2. Abdichtvorrichtung nach Anspruch 1, dadurch gekennzeichnet, daß der Hohlkörper (11), der Deckenteil (3) und der Bodenteil (2) einteilig ausgebildet sind.

3. Abdichtvorrichtung nach den Ansprüchen 1 und 2, dadurch gekennzeichnet, daß die Handhabe (5) mit dem Deckenteil (3), dem Hohlkörper (11) und dem Bodenteil (2) einteilig ausgebildet ist.

4. Abdichtvorrichtung nach Anspruch 3, dadurch gekennzeichnet, daß die Handhabe (5) aus Verlängerungen des Hohlkörpers (11) besteht, deren gegenüberliegende Seitenflächen luftdicht miteinander verbunden sind.

5. Abdichtvorrichtung nach den Ansprüchen 1 und 2, dadurch gekennzeichnet, daß das Material der Blase (1) aus einer Gummischicht besteht, die außen mit einer Haut aus öl- und säurefestem Material ummantelt ist, deren Dehnbarkeit der der Gummischicht entspricht.

6. Abdichtvorrichtung nach Anspruch 1, dadurch gekennzeichnet, daß zum Aufblasen der Blase (1) eine am Füllventil (4) anschließbare Druckluftkapsel (9) vorgesehen ist.

7. Abdichtvorrichtung nach den Ansprüchen 1 und 6, dadurch gekennzeichnet, daß mindestens eine Blase (1) und eine Druckluftkapsel (9) zu einer Packung zusammengefaßt sind.

## Claims

1. A sealing device for sealing the access opening (7) of shafts, channels and similar in streets, on places, ways, greens, domestic and court drainages as well as buldings in the industry and similar applications as protection against detriment liquids such as chemicals, oils, motor vehicle fuels, propellants and similar by means of a cylinder-shaped body forming a bag (1) consisting of elastic material, of a length greater than the bag diameter, and with which the centre hollow body (11) is closed by a top part (3) supporting a handle (5) and a filling valve (4) on the one end while the other end is closed by a bottom part (2) identified by the feature that the top part (3) and the bottom part (2) consist exclusively of the identical elastic material of exclusively identical elasticity (minimum 1 : 8) just as the hollow body (11) and that the top part (3) and bottom part (2) are made of material approximately equally thick as that of the hollow body (11).

2. A sealing device as under claim 1, identified by the feature that the hollow body (11), the top part (3), and the bottom part (2) are made of one piece.

3. A sealing device as under the claims 1 and 2,identified by the feature that the handle (5), the top part (3), the hollow body (11), and the bottom part (2) are made of one piece.

4. A sealing device as under claim 3 identified by the feature that the handle (5) consists of extensions of the hollow body (11) the adjacent lateral surfaces of which are connected to each other by air-tight means.

5. A sealing device as under claims 1 and 2 identified by the feature that the material of the bag (1) consists of a rubber lining with an outer jacket of oil and acidproof material the elasticity of which corresponds with that of the rubber lining.

6. A sealing device as under claim 1 identified by the feature that for inflating purposes of the bag (1) a compressed air capsule (9) to be connected to the filling valve (4) has been provided.

7. A sealing device as under the claims 1 and 6 identified by the feature that a minimum of one bag (11) and one compressed air capsule (9) forms one package.

## Revendications

1. Dispositif d'étanchétié pour assurer l'étanchéité de l'ouverture d'arrivée (7) des puits, canalisations et similaires, pour routes, places, voies, îlots de verdure, égouts d'immeubles et de cours, ainsi que pour les bâtiments industriels et autres, comme protection contre l'introduction de liquides nocifs, tels que les produits chimiques, les huiles, les carburants, les combustibles et similaires, au moyen d'une vésicule d'étanchéité (1) se présentant sous forme d'un corps cylindrique, composé d'un matériau élastique, dont la longueur est plus longue que le diamètre, et dont le corps creux médian (11) est obturé à une extrémité par un élément-plafond (3) portant une manette (5) et une soupape de remplissage (4), l'autre extrémité étant obturée par un élément de fond (2), avec la caractéristique suivante, à savoir que l'élément-plafond (3) et l'élément de fond (2) se composent tous deux exclusivement du même matériau élastique présentant les mêmes caractéristiques d'extensibilité d'au moins 1 : 8 que le corps creux (11), et que l'élément-plafond (3) et l'élément de fond (2) présentent à peu près la même épaisseur de matériau que le corps creux (11).

2. Dispositif d'étanchéité selon le droit 1, caractérisé par le fait que le corps creux (11), l'élément-plafond (3) et l'élément de fond (2) forment un seul bloc.

3. Dispositif d'étanchéité selon les droits 1 et 2, caractérisé par le fait que la manette (5) est formée d'un seul bloc avec l'élément-plafond (3), le corps creux (11) et l'élément de fond (2).

4. Dispositif d'étanchéité selon le droit 3, caractérisé par le fait que la manette (5) se compose de prolongations du corps creux (11), dont les surfaces latérales opposées sont reliées ensemble de manière étanche à l'air.

5. Dispositif d'étanchéité selon les droits 1 et 2, caractérisé par le fait que le matériau de la vésicule (1) se compose d'une couche de caoutchouc, qui est revêtue à l'extérieur d'une peau résistant aux huiles et aux acides, et dont l'extensibilité correspond à celle de la couche de caoutchouc.

6. Dispositif d'étanchéité selon le droit 1, caractérisé par le fait qu'il est prévu une cartouche d'air comprimé connectable à la soupape de remplissage (4) en vue du gonflement de la vésicule.

7. Dispositif d'étanchéité selon les droits 1 et 6, caractérisé par le fait qu'au moins une vésicule (1) et une cartouche d'air comprimé (9) sont regroupées en un paquet.

FIG. 1

FIG. 2

FIG. 3

FIG. 4